# EUROPÄISCHE PATENTSCHRIFT

(11) **EP 3 406 500 B1**
(45) Veröffentlichungstag und Bekanntmachung des Hinweises auf die Patenterteilung: **02.10.2024**
(21) Anmeldenummer: 18171433.8
(22) Anmeldetag: 09.05.2018
(51) Int. Cl.: B60W 30/14, B60W 30/18, B60W 50/14

(54) **FAHRERASSISTENZSYSTEM EINES KRAFTFAHRZEUGS**
DRIVER ASSISTANCE SYSTEM OF A MOTOR VEHICLE
SYSTÈME D'ASSISTANCE À LA CONDUITE D'UN VÉHICULE AUTOMOBILE

(30) Priorität: 24.05.2017 DE 102017005009
(43) Veröffentlichungstag der Anmeldung: 28.11.2018
(73) Patentinhaber: MAN Truck & Bus SE, 80995 München (DE)
(72) Erfinder: Pongratz, Michael, 85414 Kirchdorf (DE); Mohra, Holger, 80805 München (DE); Arnold, Claus, 93161 Sinzing (DE); Zademach, Martin, 85232 Begkirchen (DE); Güllich, Johannes, 85229 Markt Indersdorf (DE); Wölfel, Christiane, 80337 München (DE); Gerlinger, David, 80809 München (DE); Baumann, Manuel, 85551 Kirchheim (DE)
(74) Vertreter: v. Bezold & Partner Patentanwälte - PartG mbB

(56) Entgegenhaltungen:
- EP-A1- 2 857 247
- EP-A1- 3 275 716
- WO-A1-2016/152553
- WO-A2-2008/008404
- DE-A1- 102010 023 195
- DE-A1- 102010 042 115
- DE-A1- 102011 112 943
- DE-A1- 102012 009 890
- DE-A1- 102012 013 689
- DE-A1- 102012 210 145
- DE-T5- 112014 005 122
- US-A1- 2017 080 952

## Beschreibung

Die vorliegende Erfindung betrifft ein Fahrerassistenzsystem eines Kraftfahrzeugs. Insbesondere sind ein Fahrerassistenzsystem mit Funktionalität außerhalb eines Regelungsbetriebs und ein mit einem solchen Fahrerassistenzsystem ausgestattetes Kraftfahrzeug beschrieben.

Die Fahrer eines Kraftfahrzeugs, insbesondere Busfahrer und Lastwagenfahrer, müssen auf langen Touren konzentriert am Straßenverkehr teilnehmen. Diese anstrengende Aufgabe wird inzwischen durch verschiedene Assistenzsysteme wesentlich erleichtert. Es existieren jedoch spezielle Vorgänge, bei denen Assistenzsysteme nur in begrenztem Rahmen eine Hilfe darstellen und der Fahrer auf kritische Situationen selbst reagieren muss, wie z. B. der Überholvorgang. Der Fahrer muss vor und während des Überholvorgangs den Abstand und insbesondere die Geschwindigkeit des vorausfahrenden Fahrzeugs intuitiv beurteilen, um einzuschätzen, ob das Überholen in diesem Moment möglich ist. Eine spontane und intuitive Geschwindigkeitsschätzung ist jedoch anfällig für vereinzelte und umso mehr unerwartete Fehleinschätzungen.

Das Dokument DE 10 2012 210145 A1 beschreibt ein Verfahren zur Unterstützung eines Fahrers bei einem Spurwechsel, in dem ein Bild aus einer Kamera in Frontrichtung des Fahrzeugs ausgegeben wird, wobei ein erkanntes Objekt durch einen Fingerabdruck mit Fragezeichen überlagert wird. Nach einer Auswahl des Fahrers mittels eine vordefinierten Betätigungssignals werden dem Fahrer eine Zeitspanne bis zur Kollision mit dem ausgewählten Objekt angezeigt.

Ferner können Wetterverhältnisse und Dunkelheit die Einschätzung des Fahrers über das vorausfahrende Fahrzeug erheblich einschränken, z. B. die genaue Bestimmung der Geschwindigkeit des Vorderfahrzeugs unzuverlässig machen. Zudem nimmt auf langen Fahrten die Konzentration der Fahrer ab und Einschätzungen über Abstand und Geschwindigkeit des vorausfahrenden Fahrzeugs werden fehleranfälliger.

Somit besteht die Aufgabe, eine Technik anzugeben, die den Fahrer bei der Einschätzung einer Überholsituation, insbesondere mit einem schweren Kraftfahrzeug, unterstützt. Eine Alternative oder weitere Aufgabe ist, die Fahrsituation ohne zusätzliche Sensorik zu objektivieren.

Diese Aufgabe oder Aufgaben werden durch eine Technik mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist ein Fahrerassistenzsystem eines Kraftfahrzeugs bereitgestellt. Das Fahrerassistenzsystem umfasst einen Sensor oder eine Schnittstelle zum Erfassen von Ist-Werten zu Abstand und Geschwindigkeit eines vorausfahrenden Fahrzeugs und eine Längsführung, die dazu ausgebildet ist, in einem aktiven Zustand der Längsführung den Abstand und/oder eine Fahrgeschwindigkeit des Kraftfahrzeugs abhängig von den erfassten Ist-Werten zu regeln. Das Fahrerassistenzsystem umfasst ferner ein Kombinationsinstrument, das dazu ausgebildet ist, in einem deaktivierten Zustand der Längsführung mindestens einen der erfassten Ist-Werte zu Abstand und Geschwindigkeit des vorausfahrenden Fahrzeugs oder einen davon abgeleiteten Wert anzuzeigen.

Der angezeigte, sensorbasierte Wert kann eine fehleranfällige intuitive oder visuelle Abschätzung verbessern, verifizieren oder vermeiden. Indem auch im deaktivierten Zustand der Längsführung der Wert angezeigt wird, kann der Fahrer, insbesondere zum Nutzen beim Überholvorgang, ohne zusätzliche Sensorik objektiv über den Abstand und/oder die Geschwindigkeit des vorausfahrenden Fahrzeugs in Kenntnis gesetzt werden. Dabei kann der Abstand räumlich und/oder zeitlich (beispielsweise aufgrund der eigenen Fahrgeschwindigkeit des Kraftfahrzeugs oder der Relativgeschwindigkeit zum vorausfahrenden Fahrzeug) angezeigt werden.

Insbesondere kann die Technik ermöglichen, dass der Fahrer auch bei deaktivierter Längsführung spontan, ohne Interaktion und/oder ohne Ablenkung und Verzögerung durch eine Eingabe, auf die gleichen Informationen zurückgreifen kann wie z. B. die Längsführung, die mittels des Sensors oder dessen Schnittstelle automatisch mit der Geschwindigkeit des vorausfahrenden Fahrzeugs versorgt wird.

Der angezeigte Wert kann dem Fahrer, insbesondere in einer kritischen Fahrsituation wie dem Überholvorgang, unmittelbar zur Verfügung stehen. Insbesondere muss diese Information vom Fahrer weder spontan intuitiv eingeschätzt noch mühsam über Menüstrukturen der Längsführung abgerufen werden. Dagegen stehen bei bestehenden Systemen entsprechende Informationen, wie z. B. die Geschwindigkeit des vorausfahrenden Fahrzeugs, nur der aktivierten Längsregelung oder dem Fahrerassistenzsystem selbst zur Verfügung und/oder sind nur in Kombination mit der aktivierten Längsregelung angezeigt oder proaktiv abrufbar.

Die Werte können sowohl im aktiven als auch deaktivierten Zustand der Längsführung angezeigt sein. Alternativ oder ergänzend können die Werte dauerhaft, beispielsweise durchgehend während der Fahrt (etwa oberhalb einer Mindestgeschwindigkeit), angezeigt sein.

Die Technik kann zur Verbesserung der Sicherheit im Kraftfahrzeug eingesetzt sein. Der Einsatz der Technik kann verhindern, dass der Fahrer Zeit verliert oder abgelenkt ist, indem die erforderliche Information über das vorausfahrende Fahrzeug mit einem Blick zur Verfügung steht, und beispielsweise nicht erst abgerufen werden muss, etwa durch Anwahl eines Menüpunkts "Assistenzsysteme" während der Fahrt.

Der Sensor kann mindestens einen in Fahrrichtung gerichteten Radarsensor umfassen. Die Schnittstelle kann dazu ausgebildet sein, Signale oder Messwerte des Radarsensors zu erfassen. Der oder die Sensoren können Daten wie Geschwindigkeit und Abstand des vorausfahrenden Fahrzeugs wesentlich genauer berechnen als der Menschen diese intuitiv abschätzen könnte. Zudem können die Ist-Werte, beispielsweise auf Basis des Radarsensors, durch Niederschlag und Dunkelheit unbeeinträchtigt sein.

Das Kombinationsinstrument kann eine Anzeigeeinheit (beispielsweise zum Anzeigen der Werte), eine Steuerungseinheit (beispielsweise zum Ansteuern der Anzeige und/oder zur Durchführung von numerischen Berechnungen) und/oder eine Eingabeeinheit (beispielsweise Multifunktionstasten eines Lenkrads) umfassen. Die Anzeigeeinheit kann ein zweidimensionales Display und/oder einen Projektor eines Head-Up-Displays umfassen.

Die Funktionalität der Längsführung im aktiven Zustand kann einen Abstandsregeltempomat (auch: Adaptive Cruise Control oder ACC) umfassen. Das Regeln des Abstands und der Fahrgeschwindigkeit des Kraftfahrzeugs im aktiven Zustand der Längsführung kann ein Steuern eines Antriebs (beispielsweise einzelner Komponenten eines Antriebsstrangs) und/oder eines Bremssystems des Kraftfahrzeugs umfassen. Die Längsführung kann auch Teil einer umfassenderen (beispielsweise autonomen) Fahrregelung mit Lenkregelung sein.

Im deaktivierten Zustand der Längsführung kann eine Regelung des Abstands zum vorausfahrenden Fahrzeug und/oder der Fahrgeschwindigkeit des Kraftfahrzeugs unterbleiben. Optional können im deaktivierten Zustand der Abstand zum vorausfahrenden Fahrzeug und/oder die Geschwindigkeit des vorausfahrenden Fahrzeugs überwacht werden (beispielsweise ohne Grundlage einer Regelung zur Längsführung des Kraftfahrzeugs zu sein). Die Funktionalität der Längsführung im deaktivierten Zustand kann eine autonome Notbremsung umfassen. Alternativ oder ergänzend kann, insbesondere wenn der Abstand einen vorbestimmten Mindestabstand (beispielsweise einen gesetzlichen und/oder sicherheitsrelevanten Mindestabstand) unterschreitet, wenn eine (beispielsweise negative, d.h. annähernde) Relativgeschwindigkeit zum vorausfahrenden Fahrzeug eine vorbestimmte Mindestgeschwindigkeit unterschreitet oder wenn ein von Abstand und Relativgeschwindigkeit abhängiger Schwellwert erreicht wird, das Kombinationsinstrument eine Warnung bewirken oder ausgeben. Die Warnung kann akustisch, haptisch (beispielsweise eine Vibration des Lenkrads) oder grafisch (beispielsweise eine Hervorhebung des angezeigten Abstands und/oder der angezeigten Geschwindigkeit) sein.

Der im deaktivierten Zustand der Längsführung angezeigte Wert kann eine Fahrgeschwindigkeit des vorausfahrenden Fahrzeugs und/oder eine Relativgeschwindigkeit des vorausfahrenden Fahrzeugs bezüglich des Kraftfahrzeugs umfassen. Der im deaktivierten Zustand angezeigte Wert kann einen zeitlichen Abstand des vorausfahrenden Fahrzeugs bezüglich des Kraftfahrzeugs umfassen.

Das Kombinationsinstrument kann ferner dazu ausgebildet sein, eine Zeitdauer eines Vorgangs zum Überholen des vorausfahrenden Fahrzeugs durch das Kraftfahrzeug zu berechnen. Der im deaktivierten Zustand angezeigte Wert kann die berechnete Zeitdauer umfassen.

Die berechnete Zeitdauer kann von einer Längsneigung einer vorausliegenden Fahrbahn, Fahrzeugeigenschaften des eigenen Kraftfahrzeugs und/oder Fahrzeugeigenschaften des vorausfahrenden Fahrzeugs abhängen. Die Fahrzeugeigenschaften des eigenen Kraftfahrzeugs können im Kombinationsinstrument gespeichert und/oder vom Kombinationsinstrument aus dem Fahrverhalten des Kraftfahrzeugs (insbesondere dessen Beschleunigung und/oder Verzögerung) berechnet werden. Die Fahrzeugeigenschaften des vorausfahrenden Fahrzeugs können vom Kombinationsinstrument aus den Ist-Werten (insbesondere Beschleunigung und/oder Verzögerung des vorausfahrenden Fahrzeugs) berechnet werden und/oder über einer Funkschnittstelle (beispielsweise von einem Datenserver oder vom vorausfahrenden Fahrzeug) abgefragt werden.

Die Fahrzeugeigenschaften des vorausfahrenden Kraftfahrzeugs können ein Antriebsvermögen des vorausfahrenden Fahrzeugs, eine Fahrzeugmasse des vorausfahrenden Fahrzeugs und/oder eine Soll-Geschwindigkeit einer Geschwindigkeitsregelung des vorausfahrenden Fahrzeugs umfassen. Das Antriebsvermögen kann einer Motorleistung und/oder einer Beschleunigung des vorausfahrenden Fahrzeugs auf einer horizontalen Fahrbahn entsprechen. Die Fahrzeugmasse des vorausfahrenden Fahrzeugs kann die Masse der Fahrzeugladung einschließen (beispielsweise als Gesamtgewicht).

Aufgrund des Antriebsvermögens des vorausfahrenden Fahrzeugs, der Fahrzeugmasse des vorausfahrenden Fahrzeugs und der Längsneigung kann die Beschleunigung des vorausfahrenden Fahrzeugs auf der vorausliegenden Fahrbahn vorausberechnet werden. Aufgrund der erfassten Ist-Geschwindigkeit und der vorausberechneten Beschleunigung kann die Geschwindigkeit des vorausfahrenden Fahrzeugs vorausberechnet werden. Alternativ oder ergänzend kann anhand der Soll-Geschwindigkeit der Geschwindigkeitsregelung des vorausfahrenden Fahrzeugs dessen Geschwindigkeit vorausberechnet werden.

Alternativ oder ergänzend kann aufgrund der Fahrzeugeigenschaften des Kraftfahrzeugs und der Längsneigung die Beschleunigung und die Geschwindigkeit des Kraftfahrzeugs vorausberechnet werden. Die Fahrzeugeigenschaften des Kraftfahrzeugs können ein Antriebsvermögen des Kraftfahrzeugs und eine Masse des Kraftfahrzeugs umfassen. Das Antriebsvermögen des Kraftfahrzeugs kann einer Motorleistung und/oder einer Beschleunigung des Kraftfahrzeugs auf einer horizontalen Fahrbahn entsprechen. Das Antriebsvermögen kann im Kombinationsinstrument gespeichert sein. Die Masse des Kraftfahrzeugs kann die Masse der Fahrzeugladung einschließen (beispielsweise als Gesamtgewicht). Die Masse des Kraftfahrzeugs und/oder eine Leermasse (beispielsweise als Leergewicht) kann im Kombinationsinstrument gespeichert sein. Beispielsweise kann die Masse des Kraftfahrzeugs aus der Summe der Leermasse und einer geschätzten oder (beispielsweise vor Fahrtbeginn) eingegebenen Ladungsmasse (beispielsweise als Ladungsgewicht) berechnet werden. Das Kombinationsinstrument kann dazu ausgebildet sein, die Masse des Kraftfahrzeugs aus dem Fahrverhalten abzuschätzen.

Die Zeitdauer des Vorgangs zum Überholen kann aufgrund des erfassten Ist-Werts des Abstands, der vorausberechneten Fahrgeschwindigkeit des Kraftfahrzeugs und der vorausberechneten Geschwindigkeit des vorausfahrenden Fahrzeugs berechnet werden. Der vorausberechneten Fahrgeschwindigkeit des Kraftfahrzeugs kann eine maximale Motorleistung zugrunde liegen. Der vorausberechneten Geschwindigkeit des vorausfahrenden Fahrzeugs kann eine unveränderte Geschwindigkeit oder unveränderte Motorleistung zugrunde liegen. Die Berechnung der Zeitdauer kann von den Ist-Werten als Anfangswerten ausgehen. Das Ende der berechneten Zeitdauer kann durch das vollständige Passieren des vorausfahrenden Fahrzeugs definiert sein.

Die Berechnung der Zeitdauer kann ferner eine Länge des Kraftfahrzeugs und/oder des vorausfahrenden Fahrzeugs berücksichtigen. Die Länge kann aus den Ist-Werten des Sensors (beispielsweise maximal entfernte Reflexionsstellen des Signals des Radarsensors) erfasst werden. Alternativ oder ergänzend kann eine (beispielsweise gesetzlich vorgeschriebene) maximale Fahrzeuglänge der Berechnung der Zeitdauer zugrunde gelegt sein.

Das Kombinationsinstrument kann dazu ausgebildet sein, die Längsneigung (beispielsweise eine Steigung, eine horizontale Ebene oder ein Gefälle) der vorausliegenden Fahrbahn zu bestimmen. Die Längsneigung kann mittels einer Frontkamera (beispielsweise einer Stereokamera) und/oder aufgrund topografischer Daten für die vorausliegende Fahrbahn bestimmt werden. Die Längsneigung kann als ortsbezogener Verlauf entlang der vorausliegenden Fahrbahn bestimmt werden.

Das Kombinationsinstrument kann ferner dazu ausgebildet sein, einen Spurwechsel zu erfassen und die Geschwindigkeit des vorausfahrenden Fahrzeugs in Reaktion auf die Erfassung des Spurwechsels anzuzeigen. Der Spurwechsel kann erfasst werden mittels einer kamerabasierten Spurerkennung, beispielsweise aufgrund eines Abgleichs der von der Kamera erfassten Fahrspur mit einer Position, einer Fahrtrichtung und/oder einem Lenkwinkel des Kraftfahrzeugs. Alternativ oder ergänzend kann der Spurwechsel erfasst werden aufgrund einer Lenkbewegung und/oder aufgrund des Setzens eines Fahrtrichtungsanzeigers.

Der angezeigte Wert oder die angezeigten Werte, insbesondere die Geschwindigkeit des vorausfahrenden Fahrzeugs, können durch Projektion in das Sichtfeld eines Fahrers des Kraftfahrzeugs angezeigt werden. Der oder die Werte können in einem Head-Up-Display angezeigt werden. Eine Position der angezeigten Geschwindigkeit im Sichtfeld eines Fahrers des Kraftfahrzeugs kann einer Position des vorausfahrenden Fahrzeugs entsprechen. Beispielsweise können in Blickrichtung des Fahrers die Fahrzeugposition und der angezeigte Wert überlappen.

Der Ist-Wert des Abstands und/oder der Geschwindigkeit des vorausfahrenden Fahrzeugs kann mittels eines Radarsensors, mittels einer Stereokamera und/oder durch Funkkommunikation vom vorausfahrenden Fahrzeug zum Kraftfahrzeug erfasst werden. Insbesondere kann die Schnittstelle eine Funkschnittstelle sein.

Alternativ oder ergänzend kann eine Funkkommunikation vom vorausfahrenden Fahrzeug zum Kraftfahrzeug Informationen zum vorausfahrenden Fahrzeug umfassen. Das Kombinationsinstrument kann ferner dazu ausgebildet sein, die funkkommunizierten Informationen und/oder aus den funkkommunizierten Informationen berechnete Werte anzuzeigen. Die funkkommunizierten Informationen können, alternativ oder ergänzend zum Anzeigen, Grundlage der Berechnung der Zeitdauer des Vorgangs zum Überholen sein.

Die funkkommunizierten Informationen und/oder die angezeigten Werte können die Fahrzeugeigenschaften des vorausfahrenden Fahrzeugs umfassen. Beispielsweise können die funkkommunizierten Informationen und/oder die angezeigten Werte das Antriebsvermögen des vorausfahrenden Fahrzeugs, die Fahrzeugmasse des vorausfahrenden Fahrzeugs und/oder die Soll-Geschwindigkeit der Geschwindigkeitsregelung des vorausfahrenden Fahrzeugs umfassen. Die Geschwindigkeitsregelung kann auch als Tempomat bezeichnet werden. Die Sollgeschwindigkeit kann auch als Setzgeschwindigkeit bezeichnet werden.

Die Informationen zum vorausfahrenden Fahrzeug können im aktiven und/oder deaktivierten Zustand der Längsführung angezeigt werden. Die Informationen zum vorausfahrenden Fahrzeug können einen Namen oder eine Kennung des Fahrers des vorausfahrenden Fahrzeugs und/oder eine Bezeichnung (beispielsweise eine Firma) des Betreibers des vorausfahrenden Fahrzeugs umfassen.

Das Fahrerassistenzsystem kann ferner eine Eingabeeinheit umfassen. Die Eingabeeinheit kann dazu ausgebildet sein, das Anzeigen der Geschwindigkeit des vorausfahrenden Fahrzeugs im deaktivierten Zustand der Längsführung abzuschalten. Alternativ oder ergänzend kann die Eingabeeinheit dazu ausgebildet sein, die Längsführung wahlweise zu aktivieren und zu deaktivieren.

Das Kombinationsinstrument kann ferner dazu ausgebildet sein, im deaktivierten Zustand der Längsführung den angezeigten Wert (beispielsweise die Geschwindigkeit) des vorausfahrenden Fahrzeugs in einer ersten Maske anzuzeigen. Das Kombinationsinstrument kann ferner dazu ausgebildet sein, im aktiven Zustand der Längsführung eine von der ersten Maske verschiedene zweite Maske anzuzeigen. Die Masken können unterschiedliche grafische Darstellungen des Kraftfahrzeugs, des vorausfahrenden Fahrzeugs und/oder der vorausliegenden Fahrbahn umfassen.

Gemäß einem weiteren Aspekt ist ein Kraftfahrzeug, insbesondere ein Nutzfahrzeug, bereitgestellt. Das Kraftfahrzeug umfasst ein Fahrerassistenzsystem gemäß dem vorgenannten Aspekt.

Das Kraftfahrzeug kann eine Vielzahl an Sensoren zur Überwachung verschiedener Umgebungsbereiche des Kraftfahrzeugs umfassen. Das Kraftfahrzeug kann ferner mehrere funktional verschiedene Regelungen (beispielsweise des Antriebs, der Bremsen und/oder der Lenkung) umfassen. Die funktional verschiedenen Regelungen können Signale von den Sensoren erfassen und verarbeiten.

Eine der Regelungen kann die Längsführung sein. Das Kraftfahrzeug kann ein Nutzfahrzeug (beispielsweise ein Lastkraftwagen zur Güterbeförderung und/oder ein Bus zur Personenbeförderung) oder ein Personenkraftwagen sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Aufsicht eines exemplarischen Kraftfahrzeugs mit einem Ausführungsbeispiel des Fahrerassistenzsystems;
- Figur 2: schematisch eine Anzeigeeinheit eines Kombinationsinstruments gemäß einer ersten Implementierung des Fahrerassistenzsystems;
- Figur 3: schematisch eine Anzeigeeinheit eines Kombinationsinstruments gemäß einer zweiten Implementierung des Fahrerassistenzsystems;
- Figur 4: schematisch eine Anzeigeeinheit eines Kombinationsinstruments gemäß einer dritten Implementierung des Fahrerassistenzsystems;
- Figur 5: schematisch die Anzeigeeinheit des Kombinationsinstruments gemäß der ersten Implementierung des Fahrerassistenzsystems bei verschiedenen Zuständen einer Längsführung; und
- Figur 6: schematisch einen Fahrerplatz mit der Anzeigeeinheit des Kombinationsinstruments gemäß einem Ausführungsbeispiel des Fahrerassistenzsystems.

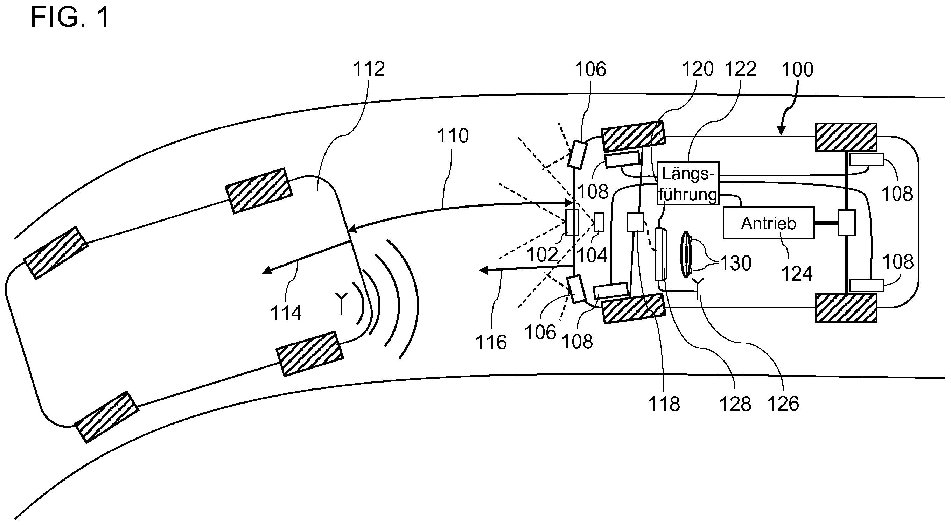

Figur 1 zeigt schematisch ein Kraftfahrzeug 100 mit Komponenten eines Ausführungsbeispiels eines Fahrerassistenzsystems. Das Fahrerassistenzsystem umfassend einen oder mehrere Sensoren 102 bis 108 und/oder eine oder mehrere Schnittstellen 120 und 126 zum Erfassen von Ist-Werten zu Abstand 110 und Geschwindigkeit eines vorausfahrenden Fahrzeugs 112. Die Geschwindigkeit des vorausfahrenden Fahrzeugs 112 kann eine Relativgeschwindigkeit oder eine Fahrgeschwindigkeit 114 des vorausfahrenden Fahrzeugs 112 umfassen. Das Fahrerassistenzsystem umfasst ferner eine Längsführung 122, die dazu ausgebildet ist, in einem aktiven Zustand der Längsführung 122 den Abstand 110 und/oder eine Fahrgeschwindigkeit 116 des Kraftfahrzeugs 100 abhängig von den erfassten Ist-Werten zu regeln, und ein Kombinationsinstrument 128, das dazu ausgebildet ist, zumindest in einem deaktivierten Zustand der Längsführung 122 mindestens einen der erfassten Ist-Werte zum vorausfahrenden Fahrzeug 112 und/oder mindestens einen von den erfassten Ist-Werten abgeleiteten Wert anzuzeigen.

Die Sensoren umfassen einen Radarsensor 102, eine Stereokamera 104, Ultraschallsensoren 106 (die beispielsweise an einer Außenhaut des Kraftfahrzeugs 100 angeordnet sind) und/oder Drehzahlsensoren 108 (beispielsweise mit Abgriff am Rad oder Getriebe). Mittels jedes der Sensoren 102 bis 106 kann der Abstand 110 zum vorausfahrenden Fahrzeug 112 erfasst werden. Mittels jedes der Sensoren 102 und 104 kann eine Relativgeschwindigkeit zum vorausfahrenden Fahrzeug 112 erfasst werden. Die Fahrgeschwindigkeit 114 des vorausfahrenden Fahrzeugs 112 kann als Summe der mittels der Sensoren 108 erfassten Fahrgeschwindigkeit 116 des Kraftfahrzeugs 100 und der Relativgeschwindigkeit berechnet werden. Die Fahrgeschwindigkeiten 114 und/oder 116 können vektoriell erfasst werden, beispielsweise mittels der Stereokamera 104 bzw. eines Lenkwinkelsensors 118.

Die Technik erreicht eine vom Zustand der Fahrerassistenzsysteme (insbesondere der einen Antrieb 124 regelnden Längsführung 122) entkoppelte, dauerhafte und/oder interaktionsfreie Anzeige des mindestens einen Werts. Die Technik kann zur dauerhaften und/oder interaktionsfreien Anzeige des mindestens einen Werts innerhalb einer bereits bestehenden Anzeigeeinheit des Kombinationsinstruments 128 in Nutzfahrzeugen (als das Kraftfahrzeug 100) implementiert sein. Dabei werden dem Fahrer im primären Sichtfeld für Fahrentscheidungen relevante Informationen über das Vorderfahrzeug 112 dauerhaft und/oder interaktionslos angeboten.

Alternativ oder ergänzend können die Ist-Werte des vorausfahrenden Fahrzeugs 112 oder Fahrzeugeigenschaften, insbesondere eine Fahrzeugmasse, eine Motorleistung und/oder ein Soll-Wert einer Geschwindigkeitsregelung des vorausfahrenden Fahrzeugs 112, über eine Funkschnittstelle 126 empfangen werden.

Ohne Veränderung der Konfiguration des Fahrerassistenzsystems wird als eine Basis-Anzeige die Geschwindigkeit 114 des Vorderfahrzeugs 112 angezeigt, die über im Nutzfahrzeug 100 verbaute Sensoren 102 bis 108 abgerufen wird. Dabei kann es sich um bestehende Sensoren handeln, die zusätzlich von Fahrerassistenzsystemen genutzt werden, oder um eigens für diese erfindungsgemäße Informationsdarstellung verbaute Sensoren.

Zusätzlich zur Anzeige der Geschwindigkeit des Vorderfahrzeugs können weitere Informationen (z. B. der Abstand 110) dargestellt werden, die über die Sensoren 102 bis 108 abrufbar sind. Optional ist die Darstellung individualisierbar. Die Anzeige umfasst geeignete Werte (z. B. mit der Einheit km / h oder mph) und kann durch grafische Darstellungen unterstützt oder ergänzt werden.

Die Darstellungsform in Zusammenhang mit dem (insbesondere im deaktivierten Zustand der Längsregelung) angezeigten Wert ist klar von anderen Zuständen des Fahrerassistenzsystems (insbesondere von Zustände mit aktiven Teilsystemen oder aktiven Fahrregelungen des Fahrerassistenzsystems) abgrenzt und ist als dauerhafte unterstützende Informationsdarstellung zu erkennen. Die Darstellung ist optional auf den Fahrer personalisierbar, d.h. Anzeigeform (beispielsweise eine schriftliche Anzeige des Werts, mit grafischer Unterstützung oder ohne grafische Unterstützung) und Inhalt (beispielsweise welche Werte und/oder wie viele Werte) der Anzeige können vom Fahrer im Rahmen der verfügbaren erfassten Ist-Werte (z. B. Geschwindigkeit 114 in km/h oder mph oder/und Abstand 110 in Metern oder Sekunden) angepasst werden.

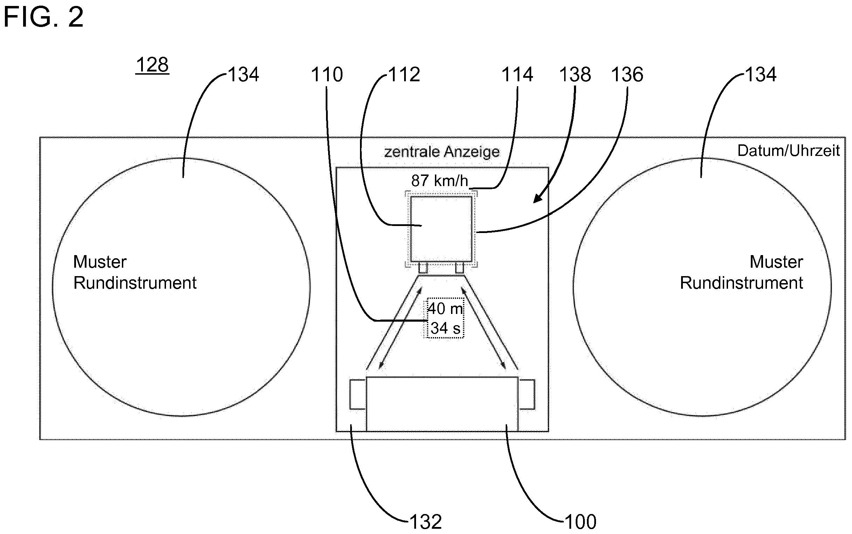

Figur 2 zeigt schematisch eine Anzeigeeinheit 132 (auch: Display) des Kombinationsinstruments 128 gemäß einer ersten Implementierung des Fahrerassistenzsystems. Das Kombinationsinstrument 128 kann weitere (beispielsweise analoge oder digitale) Rundinstrumente 134 umfassen. Insbesondere können digitale Rundinstrumente 134 auf derselben Anzeigeeinheit 132 des Kombinationsinstruments 128 angezeigt sein.

Der Abstand 110 kann in verschiedenen Einheiten (z. B. Meter oder Sekunden) angegeben sein. Die Geschwindigkeit 114 kann in km/h oder mph angezeigt sein.

Der mindestens eine angezeigte Wert zum vorausfahrenden Fahrzeug 112 wird (von der Anzeigeeinheit 132 des Kombinationsinstruments 128) in einem schematischen Kontext 138 dargestellt. Der schematischen Kontext 138 umfasst das Kraftfahrzeug 100 und das vorausfahrende Fahrzeug 112. Der schematische Kontext 138 stellt ferner den räumlichen Bezug zwischen den Fahrzeugen 100 und 112 schematisch dar. Der räumliche Bezug kann den Abstand 110 und/oder die Relativgeschwindigkeit (d.h. die Differenz der Geschwindigkeiten 114 und 116) schematisch darstellen. Der räumliche Bezug kann im schematischen Kontext 138 eindimensional (beispielsweise in einer Aufsicht oder Seitenansicht) oder perspektivisch (beispielsweise aus Sicht des Kraftfahrzeugs 100) dargestellt sein.

Beispielsweise ist in der in Figur 2 gezeigten ersten Implementierung (zumindest bei deaktiviertem Zustand der Längsführung 122) in der Anzeigeeinheit 132 der eigene LKW als Kraftfahrzeug 100 schematisch dargestellt. Das vorausfahrende Fahrzeug 112 wird als schematisches Fahrzeug 112 perspektivisch von hinten und vor dem eigenen LKW 100 dargestellt. Optional ist die schematische Darstellung des vorausfahrenden Fahrzeugs 112 entsprechend einer durch die Sensoren 102 bis 106 erfassten Beschaffenheit des vorausfahrenden Fahrzeugs 112 als Silhouette abgebildet. Die erfasste Beschaffenheit kann beispielsweise einen PKW, einen LKW, einen Bus, einen Transporter und ein Motorrad umfassen. Die Beschaffenheit wird beispielsweise mittels des Radarsensors 102 und/oder der Kamera 104 erfasst.

Alternativ oder ergänzend wird das vorausfahrende Fahrzeug 112 von einer Maske 136 umgeben, sobald die Ist-Werte von Geschwindigkeit 114 und/oder dessen Abstand 110 zum eigenen LKW 100 erfasst sind (z. B. bei einem Abstand 110 von höchstens 100 m). Ist die Anzeigeeinheit ein Head-Up-Display, kann die Maske 136 entsprechend der Sichtlinie des Fahrers des Kraftfahrzeugs 100 das tatsächliche Bild des vorausfahrenden Fahrzeugs 112 umgeben. Im Fall der intransparenten Anzeigeeinheit 132 kann die Maske das schematische Bild des vorausfahrenden Fahrzeugs 112 in der Anzeigeeinheit 132 umgeben.

Die Maske 136 erscheint zumindest im deaktivierten Zustand der Längsführung 122, insbesondere dauerhaft, d.h. solange sich das vorausfahrende Fahrzeug 112 im Erfassungsbereich des oder mindestens eines Abstandssensors befindet.

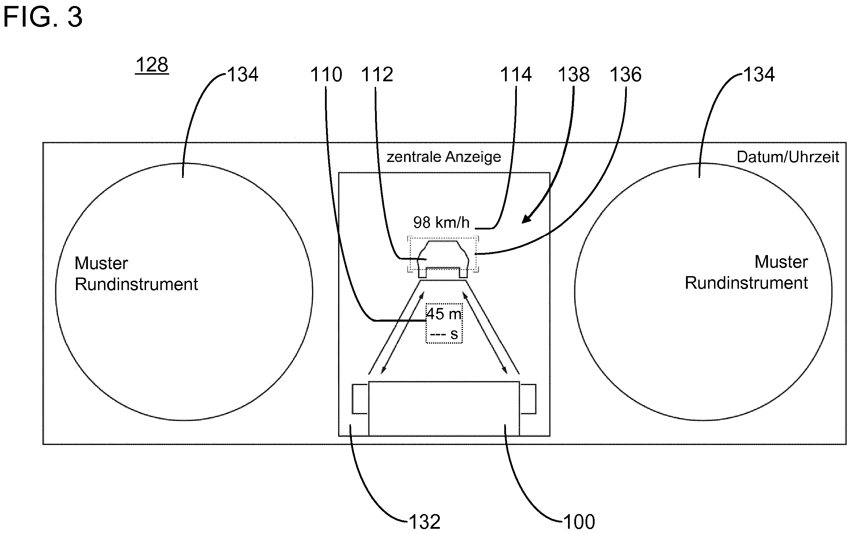

Figur 3 zeigt schematisch die Anzeigeeinheit 132 des Kombinationsinstruments 128 gemäß einer zweiten Implementierung des Fahrerassistenzsystems. Die zweite Implementierung kann als Ausgestaltung oder Variante des Ausführungsbeispiels der Figur 1 implementiert sein. Mit dem Ausführungsbeispiel der Figur 1 und/oder der ersten Implementierung übereinstimmende oder austauschbare Merkmale sind mit gleichen Bezugszeichen versehen.

Ist das vorausfahrende Fahrzeug 112 schneller als das Kraftfahrzeug 100, wird der zeitliche Abstand oder die berechnete Zeitdauer eines Überholvorgangs (beispielsweise die in Figur 2 gezeigte Sekundenanzeige) ausgeblendet. Implementationsabhängig kann "schneller" erfüllt sein, wenn die Fahrgeschwindigkeit 114 des vorausfahrenden Fahrzeugs 112 größer ist als die Fahrgeschwindigkeit 116 des Kraftfahrzeugs 100, oder wenn die unter Berücksichtigung der Fahrzeugeigenschaften berechnete Zeitdauer keine endliche Lösung hat.

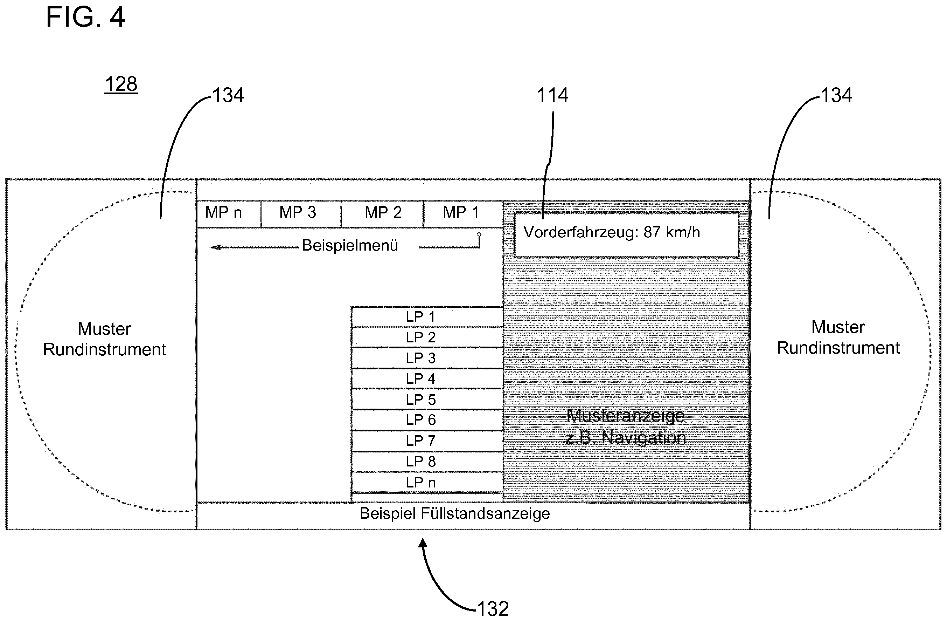

Figur 4 zeigt eine schriftliche Darstellung des mindestens einen Werts (hier beispielhaft die Fahrgeschwindigkeit 114) des vorausfahrenden Fahrzeugs 112. Die schriftliche Darstellung ist besonders platzsparend auf der Anzeigeeinheit 132. Bei der schriftlichen Darstellung kann auf die Maske 136 und/oder den schematischen Kontext 138 verzichtet werden.

Beispielsweise gibt ein Textfeld die jeweilige Größe (beispielsweise "Geschwindigkeit" 114) und/oder das in Bezug genommene Fahrzeug (hier beispielsweise "Vorderfahrzeug" 112) und den jeweiligen Ist-Wert an. Somit unterscheidet sich (auch ohne die Maske 136) die erfindungsgemäße Anzeige klar von einer Anzeige der aktivierten Längsführung 122.

Das Textfeld kann einem gegenwärtigen Inhalt der Anzeigeeinheit 132 überlagert sein., beispielsweise über einer Menüstruktur (die schematisch in der linken Bildmitte der Figur 4 gezeigt ist) oder über eine Navigationsdarstellung (wie in der rechten Bildmitte der Figur 4 gezeigt).

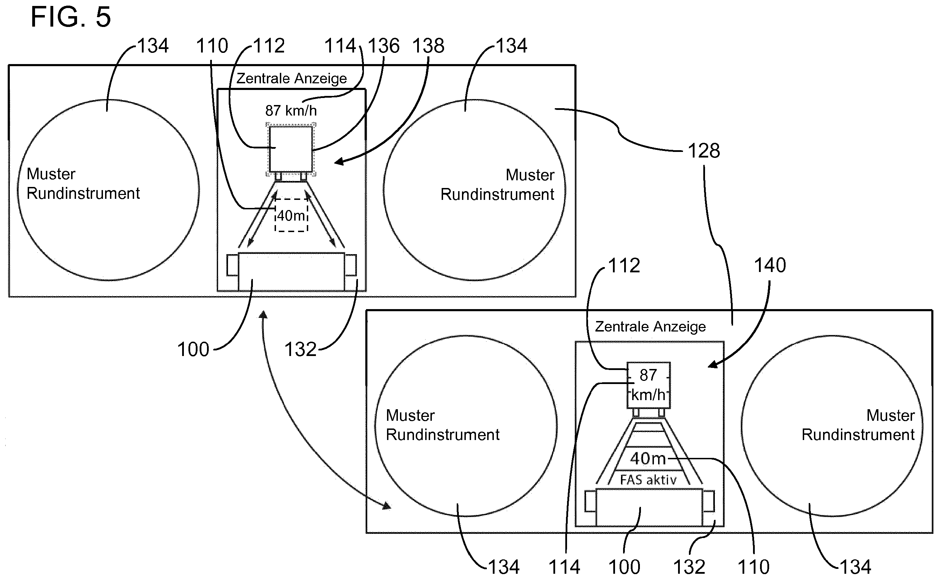

Figur 5 zeigt schematisch die Anzeigeeinheit 132 des Kombinationsinstruments 128 gemäß der ersten Implementierung des Fahrerassistenzsystems im deaktivierten Zustand der Längsführung 122 (vgl. obere Hälfte der Figur 5) und im aktiven Zustand der Längsführung 122 (vgl. untere Hälfte der Figur 5). Der schematische Kontext 138 des deaktivierten Zustands der Längsführung 122 ist eindeutig von einem schematischen Kontext 140 des ACC oder anderer Teilsysteme des Fahrerassistenzsystems, die bei einer zeitkritischen Verkehrssituation wie einem Überholvorgang nicht aktiv sein müssen, zu unterscheiden. Die Technik ist also unabhängig von (und insbesondere zusätzlich zu) ACC als Längsführung 122 und anderen Teilsystemen oder Fahrregelungen des Fahrerassistenzsystems implementierbar.

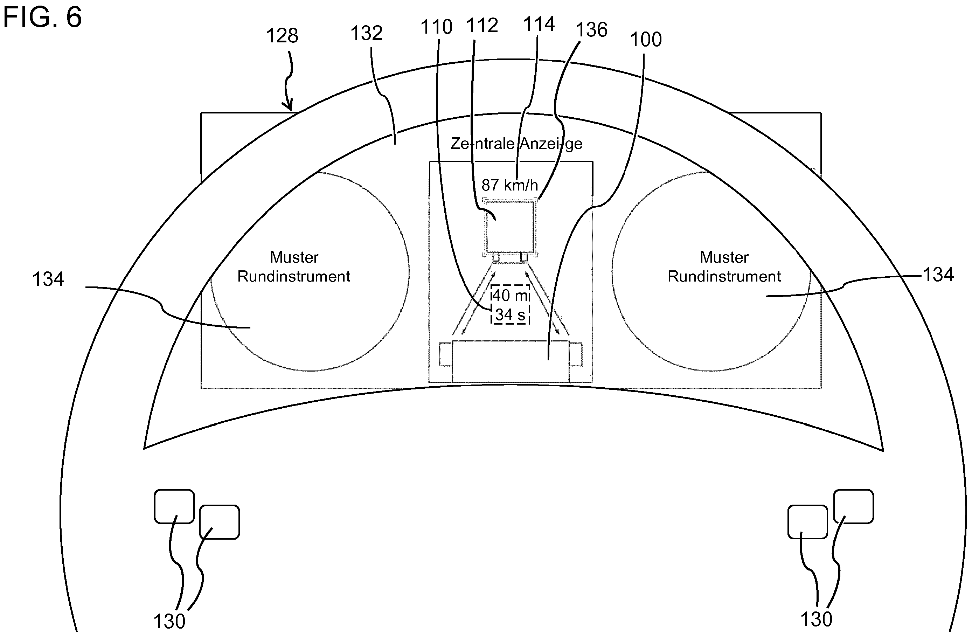

Figur 6 zeigt eine schematische Darstellung der Anzeigeeinheit 132 des Kombinationsinstruments 128 gemäß einem Ausführungsbeispiel des Fahrerassistenzsystems. Im gezeigten Ausführungsbeispiel ist die Geschwindigkeit 114 und der Abstand 110 zum vorausfahrenden LKW 112 (sowohl räumlich als auch zeitlich) im Kombinationsinstrument 128 eines LKWs als das Kraftfahrzeug 100 dargestellt. Die Anzeige dieser Ist-Werte 110 und 114 erfolgt dauerhaft auf einer grafischen Darstellung der Verkehrssituation, d.h. ist dem schematischen Kontext überlagert.

In diesem Ausführungsbeispiel wird derselbe schematische Kontext, d.h. die schematische Darstellung der Fahrzeuge 100 und 112, auch genutzt um aktive Fahrerassistenzsysteme anzuzeigen. Der Unterschied zwischen der dauerhaften oder interaktionsfreien Informationsanzeige und der Informationsanzeige des aktiven Fahrerassistenzsystems wird eindeutig grafisch (beispielsweise anhand der Maske 136) und/oder mit schriftlichen Hinweisen hervorgehoben.

Multifunktionstasten 130 am Lenkrad sind ein Beispiel der Eingabeeinheit zum Kombinationsinstrument 128.

In allen Implementierungen kann die Anzeige mit weiteren Informationen, wie z. B. dem Namen des Fahrzeugführers, Firmennamen, etc., des vorausfahrenden Fahrzeugs 112 angereichert werden. Die weiteren Informationen können über die Funkschnittstelle 126 empfangen werden. Private Informationen müssen vom vorausfahrenden Fahrzeug zuvor freigegeben werden.

Wie anhand vorstehender exemplarischer Ausführungsformen und Implementierungen für den Fachmann ersichtlich, bietet die stetige Anzeige, z. B. von Geschwindigkeitsdaten über das vorausfahrende Fahrzeug, dem Fahrer dauerhaft unterstützende Informationen bei der Durchführung seiner Arbeitsaufgabe an. Ein intuitives und automatisiertes Einschätzen des Abstands bzw. der Geschwindigkeit durch den Fahrer kann durch die angezeigten Informationen auf Grundlage der Sensoren (z. B. Radarsensoren) ergänzt oder korrigiert werden.

Die erfindungsgemäße Anzeige ermöglicht dem Fahrer, beispielsweise bei einem Widerspruch zwischen der Anzeige und seiner Einschätzung, diese zu hinterfragen und gegebenenfalls anpassen. So können Gefahrensituationen minimiert werden.

Die erfindungsgemäß Anzeige der Werte kann zudem die kognitiven Ressourcen des Fahrers schonen, d.h. der Fahrer ist länger konzentriert und läuft in konzentrationsschwachen Momenten (z. B. während einer langen Fahrt) weniger Gefahr, einen Fehler zu machen, als bei Fahrentscheidungen, die ausschließlich aufgrund intuitiver Einschätzung dieser Daten über das vorausfahrende Fahrzeug getroffen werden. Insbesondere bietet die interaktionsfreie Anzeige der Werte eine Unterstützung des Fahrers zur aktuellen Verkehrssituation, wodurch die Konzentrationsdauer über eine lange Fahrt aufrechterhalten und verbessert werden kann. Ferner kann, fall sich der Fahrer durch die angezeigte Zusatzinformation gestört fühlt, diese jederzeit abschaltet werden.

Während beim Stand der Technik der Fahrer sich auf seine Intuition verlässt, wenn der Fahrer den Abstand oder die Geschwindigkeit des vorausfahrenden Fahrzeugs einschätzt, können durch die dauerhafte Anzeige solcher Informationen über das vorausfahrende Fahrzeug Einschätzungsfehler vermieden werden, die insbesondere durch schlechte Sicht, Dunkelheit, ungünstige Wetterverhältnisse oder Wahrnehmungsfehler des Fahrers entstehen.

Indem die Werte bezüglich des vorausfahrenden Fahrzeugs ohne manuelle Änderung der Konfiguration des Fahrerassistenzsystems dauerhaft im primären Sichtfeld des Fahrers am Kombinationsinstrument angezeigt sind, stehen die Werte in zeitkritischen Situationen zur Verfügung und müssen nicht mühsam in Untermenüs abgerufen werden.

Zusätzlich zur Geschwindigkeit können weitere Informationen (beispielsweise ohne manuelle Änderung der Konfiguration oder nach individueller Voreinstellung) im deaktivierten Zustand der Längsführung angezeigt werden, beispielsweise der Abstand zum vorausfahrenden Fahrzeug, die Masse des vorausfahrenden Fahrzeugs oder eine Kennung des vorausfahrenden Fahrzeugs.

Die Technik kann die Entscheidungsgrundlage des Fahrers in sicherheitsrelevanten Verkehrssituationen verbessern, z. B. beim Überholen. Ferner kann die Technik den Fahrer bei der Überwachung der Fahrsituation, z. B. dem Einhalten einen gewünschten Abstands, unterstützen.

Das Kombinationsinstrument kann im deaktivierten Zustand der Längsführung den mindestens einen Wert in einer Maske und/oder einem Textfeld anzeigen. Die Maske oder das Textfeld können die technische Bedeutung des angezeigten Werts grafisch darstellen, beispielsweise durch Verortung innerhalb eines schematischen Kontexts. Durch die Maske, den schematischen Kontext und/oder das Textfeld ist die Anzeige im deaktivierten Zustand klar verschieden von einer Informationsmaske oder einem schematischen Kontext im aktiven Zustand, so dass der Fahrer unmissverständlich den deaktivierten Zustand der Längsführung erkennt.

Obwohl die Erfindung unter Bezugnahme auf bestimmte Ausführungsbeispiele beschrieben worden ist, ist es für den Fachmann ersichtlich, dass verschiedene Änderungen vorgenommen werden können und Äquivalente als Ersatz verwendet werden können. Ferner können viele Modifikationen vorgenommen werden, um eine bestimmte Situation und/oder einen bestimmten Funktionsumfang an die Lehre der Erfindung anzupassen. Folglich ist die Erfindung nicht auf die offenbarten Ausführungsbeispiele beschränkt, sondern umfasst alle Ausführungsbeispiel, die in den Bereich der beigefügten Patentansprüche fallen.

### Bezugszeichenliste

- 100: Kraftfahrzeug
- 102: Radarsensor
- 104: Stereokamera
- 106: Ultraschallsensor
- 108: Raddrehzahlsensor
- 110: Abstand zwischen Kraftfahrzeug und vorausfahrendem Fahrzeug
- 112: Vorausfahrendes Fahrzeug
- 114: Geschwindigkeit des vorausfahrenden Fahrzeugs
- 116: Fahrgeschwindigkeit des Kraftfahrzeugs
- 118: Lenkwinkelsensor
- 120: Sensorschnittstelle
- 122: Längsführung
- 124: Antrieb des Kraftfahrzeugs
- 126: Funkschnittstelle
- 128: Kombinationsinstrument
- 130: Eingabeeinheit
- 132: Anzeigeeinheit
- 134: Rundinstrumente
- 136: Maske
- 138: Schematischer Kontext im deaktivierten Zustand der Längsführung
- 140: Schematischer Kontext im aktiven Zustand der Längsführung

## Patentansprüche

1. Fahrerassistenzsystem eines Kraftfahrzeugs (100), umfassend:
einen Sensor (102-108) oder eine Schnittstelle (120; 126) zum Erfassen von Ist-Werten zu Abstand (110) und Geschwindigkeit (114) eines vorausfahrenden Fahrzeugs (112);
eine Längsführung (122), die dazu ausgebildet ist, in einem aktiven Zustand der Längsführung (122) den Abstand (110) und/oder eine Fahrgeschwindigkeit (116) des Kraftfahrzeugs (100) abhängig von den erfassten Ist-Werten zu regeln; und
ein Kombinationsinstrument (128),
**dadurch gekennzeichnet, dass**
das Kombinationsinstrument (128) dazu ausgebildet ist, in einem deaktivierten Zustand der Längsführung (122) mindestens einen erfassten Ist-Wert zur Geschwindigkeit (114) und mindestens einen erfassten Ist-Wert zum Abstand (110) des vorausfahrenden Fahrzeugs (112) anzuzeigen.

2. Fahrerassistenzsystem nach Anspruch 1, wobei das Kombinationsinstrument (128), dazu ausgebildet ist, in einem deaktivierten Zustand der Längsführung (122) mindestens einen von mindestens einem der erfassten Ist-Werte zu Abstand (110) und Geschwindigkeit (114) abgeleiteten Wert anzuzeigen.

3. Fahrerassistenzsystem nach Anspruch 1 oder 2, wobei im deaktivierten Zustand der Längsführung (122) die Regelung des Abstands (110) zum vorausfahrenden Fahrzeug (112) und/oder der Fahrgeschwindigkeit (116) des Kraftfahrzeugs (100) unterbleibt.

4. Fahrerassistenzsystem nach einem der Ansprüche 1 bis 3, wobei der im deaktivierten Zustand der Längsführung (122) angezeigte Wert eine Fahrgeschwindigkeit (114) des vorausfahrenden Fahrzeugs und/oder eine Relativgeschwindigkeit des vorausfahrenden Fahrzeugs (112) bezüglich des Kraftfahrzeugs (100) umfasst.

5. Fahrerassistenzsystem nach einem der Ansprüche 1 bis 4, wobei der im deaktivierten Zustand angezeigte Wert einen zeitlichen Abstand des vorausfahrenden Fahrzeugs (112) bezüglich des Kraftfahrzeugs (100) umfasst.

6. Fahrerassistenzsystem nach einem der Ansprüche 1 bis 5, wobei das Kombinationsinstrument (128) ferner dazu ausgebildet ist, eine Zeitdauer eines Vorgangs zum Überholen des vorausfahrenden Fahrzeugs (112) durch das Kraftfahrzeug (100) zu berechnen, und der im deaktivierten Zustand angezeigte Wert die berechnete Zeitdauer umfasst.

7. Fahrerassistenzsystem nach Anspruch 6, wobei die berechnete Zeitdauer von einer Längsneigung einer vorausliegenden Fahrbahn, einem Antriebsvermögen des vorausfahrenden Fahrzeugs (112), einer Fahrzeugmasse des vorausfahrenden Fahrzeugs (112) und/oder einer Soll-Geschwindigkeit einer Geschwindigkeitsregelung des vorausfahrenden Fahrzeugs (112) abhängt.

8. Fahrerassistenzsystem nach einem der Ansprüche 1 bis 7, wobei das Kombinationsinstrument (128) ferner dazu ausgebildet ist, einen Spurwechsel zu erfassen und die Geschwindigkeit (114) des vorausfahrenden Fahrzeugs (112) in Reaktion auf die Erfassung des Spurwechsels anzuzeigen.

9. Fahrerassistenzsystem nach Anspruch 8, wobei der Spurwechsel erfasst wird aufgrund eines Abgleichs von Position, Fahrtrichtung und/oder Lenkwinkel des Kraftfahrzeugs (100) mit einer kamerabasierten Spurerkennung, aufgrund einer Lenkbewegung und/oder aufgrund des Setzens eines Fahrtrichtungsanzeigers.

10. Fahrerassistenzsystem nach einem der Ansprüche 1 bis 9, wobei der angezeigte Wert, insbesondere die Geschwindigkeit (114) des vorausfahrenden Fahrzeugs (112), durch Projektion in das Sichtfeld eines Fahrers des Kraftfahrzeugs (100) angezeigt wird.

11. Fahrerassistenzsystem nach Anspruch 10, wobei eine Position der angezeigten Geschwindigkeit im Sichtfeld eines Fahrers einer Position des vorausfahrenden Fahrzeugs (112) entspricht.

12. Fahrerassistenzsystem nach einem der Ansprüche 1 bis 11, wobei der Ist-Wert des Abstands (110) und/oder der Geschwindigkeit (114) des vorausfahrenden Fahrzeugs (112) erfasst wird mittels eines Radarsensors (102), mittels einer Stereokamera (104) und/oder durch Funkkommunikation (128) vom vorausfahrenden Fahrzeug (112) zum Kraftfahrzeug (100).

13. Fahrerassistenzsystem nach einem der Ansprüche 1 bis 12, wobei eine Funkkommunikation (126) vom vorausfahrenden Fahrzeug (112) zum Kraftfahrzeug (100) Informationen zum vorausfahrenden Fahrzeug (112) umfasst, und das Kombinationsinstrument (128) ferner dazu ausgebildet ist, die funkkommunizierten Informationen und/oder aus den funkkommunizierten Informationen berechnete Werte anzuzeigen.

14. Fahrerassistenzsystem nach Anspruch 13, wobei die funkkommunizierten Informationen und/oder die angezeigten Werte ein Antriebsvermögen des vorausfahrenden Fahrzeugs (112), eine Fahrzeugmasse des vorausfahrenden Fahrzeugs (112) und/oder eine Soll-Geschwindigkeit der Geschwindigkeitsregelung des vorausfahrenden Fahrzeugs (112) umfassen.

15. Fahrerassistenzsystem nach einem der Ansprüche 1 bis 14, ferner eine Eingabeeinheit (130) umfassend, die dazu ausgebildet ist,
das Anzeigen der Geschwindigkeit (114) des vorausfahrenden Fahrzeugs (112) im deaktivierten Zustand der Längsführung (122) abzuschalten; und/oder
die Längsführung (122) wahlweise zu aktivieren und zu deaktivieren.

16. Fahrerassistenzsystem nach einem der Ansprüche 1 bis 15, wobei das Kombinationsinstrument (128) ferner dazu ausgebildet ist, im deaktivierten Zustand der Längsführung (122) die Geschwindigkeit (114) des vorausfahrenden Fahrzeugs in einer ersten Maske (136; 138) auszugeben, und im aktiven Zustand der Längsführung (122) eine von der ersten Maske verschiedene zweite Maske (140) auszugeben.

17. Kraftfahrzeug (100), insbesondere Nutzfahrzeug, umfassend ein Fahrerassistenzsystem nach einem der Ansprüche 1 bis 16.

## Claims

1. Driver assistance system of a motor vehicle (100), comprising
a sensor (102-108) or an interface (120; 126) for detecting actual values for distance (110) and speed (114) of a vehicle (112) travelling in front;
a longitudinal control (122) which is configured to control the distance (110) and/or a travelling speed (116) of the motor vehicle (100) in an active state of the longitudinal control (122) as a function of the detected actual values; and
a combination instrument (128),
**characterised in that**
the combination instrument (128) is configured to display at least one detected actual value for the speed (114) and at least one detected actual value for the distance (110) of the vehicle (112) travelling ahead in a deactivated state of the longitudinal guidance (122).

2. Driver assistance system according to claim 1, wherein the combination instrument (128) is configured to display, in a deactivated state of the longitudinal guidance (122), at least one value derived from at least one of the detected actual values for distance (110) and speed (114).

3. Driver assistance system according to claim 1 or 2, wherein the distance (110) to the vehicle (112) travelling ahead and/or the driving speed (116) of the motor vehicle (100) is not regulated in the deactivated state of the longitudinal guidance (122).

4. Driver assistance system according to one of claims 1 to 3, wherein the value displayed in the deactivated state of the longitudinal guidance (122) comprises a travelling speed (114) of the vehicle travelling ahead and/or a relative speed of the vehicle (112) travelling ahead with respect to the motor vehicle (100).

5. Driver assistance system according to one of claims 1 to 4, wherein the value displayed in the deactivated state comprises a time distance of the vehicle (112) travelling ahead with respect to the motor vehicle (100).

6. Driver assistance system according to any one of claims 1 to 5, wherein the combination instrument (128) is further configured to calculate a time duration of an operation for overtaking the vehicle (112) in front by the motor vehicle (100), and the value displayed in the deactivated state comprises the calculated time duration.

7. Driver assistance system according to claim 6, wherein the calculated time duration depends on a longitudinal inclination of a carriageway ahead, a drive capacity of the vehicle (112) travelling ahead, a vehicle mass of the vehicle (112) travelling ahead and/or a target speed of a speed control of the vehicle (112) travelling ahead.

8. Driver assistance system according to any one of claims 1 to 7, wherein the combination instrument (128) is further configured to detect a lane change and to display the speed (114) of the vehicle (112) in front in response to the detection of the lane change.

9. Driver assistance system according to claim 8, wherein the lane change is detected on the basis of a comparison of the position, direction of travel and/or steering angle of the motor vehicle (100) with a camera-based lane detection system, on the basis of a steering movement and/or on the basis of the setting of a direction indicator.

10. Driver assistance system according to one of claims 1 to 9, wherein the displayed value, in particular the speed (114) of the vehicle (112) travelling ahead, is displayed by projection into the field of view of a driver of the motor vehicle (100).

11. Driver assistance system according to claim 10, wherein a position of the displayed speed in the field of vision of a driver corresponds to a position of the vehicle (112) travelling ahead.

12. Driver assistance system according to one of claims 1 to 11, wherein the actual value of the distance (110) and/or the speed (114) of the vehicle (112) travelling ahead is detected by means of a radar sensor (102), by means of a stereo camera (104) and/or by radio communication (128) from the vehicle (112) travelling ahead to the motor vehicle (100).

13. Driver assistance system according to one of claims 1 to 12, wherein a radio communication (126) from the vehicle (112) travelling ahead to the motor vehicle (100) comprises information about the vehicle (112) travelling ahead, and the combination instrument (128) is further designed to display the radio-communicated information and/or values calculated from the radio-communicated information.

14. Driver assistance system according to claim 13, wherein the radio-communicated information and/or the displayed values comprise a driving capacity of the vehicle (112) travelling ahead, a vehicle mass of the vehicle (112) travelling ahead and/or a target speed of the cruise control of the vehicle (112) travelling ahead.

15. Driver assistance system according to any one of claims 1 to 14, further comprising an input unit (130) configured to
switching off the display of the speed (114) of the vehicle (112) in front in the deactivated state of the longitudinal guidance (122); and/or
selectively activating and deactivating the longitudinal guidance (122).

16. Driver assistance system according to one of claims 1 to 15, wherein the combination instrument (128) is further designed to output the speed (114) of the vehicle travelling ahead in a first mask (136; 138) in the deactivated state of the longitudinal guidance (122), and to output a second mask (140) different from the first mask in the active state of the longitudinal guidance (122).

17. Motor vehicle (100), in particular commercial vehicle, comprising a driver assistance system according to one of claims 1 to 16.

## Revendications

1. Système d'assistance à la conduite d'un véhicule automobile (100), comprenant :
un capteur (102-108) ou une interface (120 ; 126) destiné à acquérir des valeurs réelles à propos de l'écart (110) et de la vitesse (114) d'un véhicule qui précède (112) ;
un guidage longitudinal (122), qui est configuré pour, dans un état actif du guidage longitudinal (122), réguler l'écart (110) et/ou une vitesse de déplacement (116) du véhicule automobile (100) en fonction des valeurs réelles acquises ; et
un instrument combiné (128),
**caractérisé en ce que**
l'instrument combiné (128) est configuré pour, dans un état désactivé du guidage longitudinal (122), afficher au moins une valeur réelle acquise à propos de la vitesse (114) et au moins une valeur réelle acquise à propos de l'écart (110) du véhicule qui précède (112).

2. Système d'assistance à la conduite selon la revendication 1, l'instrument combiné (128) étant configuré pour, dans un état désactivé du guidage longitudinal (122), afficher au moins une valeur dérivée d'au moins l'une des valeurs acquises à propos de l'écart (110) et de la vitesse (114).

3. Système d'assistance à la conduite selon la revendication 1 ou 2, la régulation de l'écart (110) par rapport au véhicule qui précède (112) et/ou de la vitesse de déplacement (116) du véhicule automobile (100) étant inhibée dans l'état désactivé du guidage longitudinal (122).

4. Système d'assistance à la conduite selon l'une des revendications 1 à 3, les valeurs affichées dans l'état désactivé du guidage longitudinal (122) comprenant une vitesse de déplacement (114) du véhicule qui précède et/ou une vitesse relative du véhicule qui précède (112) par rapport au véhicule automobile (100).

5. Système d'assistance à la conduite selon l'une des revendications 1 à 4, la valeur affichée à l'état désactivée comprenant un écart temporel du véhicule qui précède (112) par rapport au véhicule automobile (100).

6. Système d'assistance à la conduite selon l'une des revendications 1 à 5, l'instrument combiné (128) étant en outre configuré pour calculer une durée d'une manœuvre de dépassement du véhicule qui précède (112) par le véhicule automobile (100), et la valeur affichée à l'état désactivé comprenant la durée calculée.

7. Système d'assistance à la conduite selon la revendication 6, la durée calculée étant dépendante d'une voie de circulation se trouvant à l'avant, d'une capacité de propulsion du véhicule qui précède (112), d'une masse de véhicule du véhicule qui précède (112) et/ou d'une vitesse de consigne d'un régulateur de vitesse du véhicule qui précède (112).

8. Système d'assistance à la conduite selon l'une des revendications 1 à 7, l'instrument combiné (128) étant en outre configuré pour détecter un changement de voie et afficher la vitesse (114) du véhicule qui précède (112) en réaction à la détection du changement de voie.

9. Système d'assistance à la conduite selon la revendication 8, le changement de voie étant détecté sur la base d'une comparaison de position, de sens de circulation et/ou d'angle de braquage du véhicule automobile (100) avec une reconnaissance de voie basée sur caméra, sur la base d'un mouvement de direction et/ou sur la base de l'enclenchement d'un indicateur de changement de direction.

10. Système d'assistance à la conduite selon l'une des revendications 1 à 9, la valeur affichée, notamment la vitesse (114) du véhicule qui précède (112), étant affichée par projection dans le champ de vision d'un conducteur du véhicule automobile (100).

11. Système d'assistance à la conduite selon la revendication 10, une position de la vitesse affichée dans le champ de vision d'un conducteur correspondant à une position du véhicule qui précède (112).

12. Système d'assistance à la conduite selon l'une des revendications 1 à 11, la valeur réelle de l'écart (110) et/ou de la vitesse (114) du véhicule qui précède (112) étant acquise au moyen d'un capteur radar (102), au moyen d'une caméra stéréoscopique (104) et/ou par radiocommunication (128) du véhicule qui précède (112) vers le véhicule automobile (100).

13. Système d'assistance à la conduite selon l'une des revendications 1 à 12, une radiocommunication (126) du véhicule qui précède (112) vers le véhicule automobile (100) comprenant des informations à propos du véhicule qui précède (112), et l'instrument combiné (128) étant en outre configuré pour afficher les informations communiquées par radio et/ou des valeurs calculées à partir des informations communiquées par radio.

14. Système d'assistance à la conduite selon la revendication 13, les informations communiquées par radio et/ou les valeurs affichées comprenant une capacité de propulsion du véhicule qui précède (112), une masse de véhicule du véhicule qui précède (112) et/ou une vitesse de consigne du régulateur de vitesse du véhicule qui précède (112).

15. Système d'assistance à la conduite selon l'une des revendications 1 à 14, comprenant en outre une unité de saisie (130) qui est configurée pour
mettre hors circuit l'affichage de la vitesse (114) du véhicule qui précède (112) dans l'état désactivé du guidage longitudinal (122) ; et/ou
au choix, activer et désactiver le guidage longitudinal (122).

16. Système d'assistance à la conduite selon l'une des revendications 1 à 15, l'instrument combiné (128) étant en outre configuré pour, dans l'état désactivé du guidage longitudinal (122), délivrer la vitesse (114) du véhicule qui précède dans un premier masque (136 ; 138) et, l'état actif du guidage longitudinal (122), la délivrer dans un deuxième masque (140) différent du premier masque.

17. Véhicule automobile (100), notamment véhicule utilitaire, comprenant un système d'assistance à la conduite selon l'une des revendications 1 à 16.
